# EUROPEAN PATENT APPLICATION

(11) **EP 4 345 293 A1**
(43) Date of publication of application: **03.04.2024**
(21) Application number: 23382623.9
(22) Date of filing: 21.06.2023
(51) Int. Cl.: F03D 13/20, E04C 5/08, E04H 12/16

(54) **ADAPTER OF A TOWER OF A WIND TURBINE TOWER AND CONCRETE SECTION OF A TOWER OF A WIND TURBINE**

(30) Priority: 27.09.2022 EP 22382885; 27.09.2022 EP 22382884
(71) Applicant: Nordex Energy Spain, S.A.U., 31395 Barasoain (Navarra) (ES); Nordex Energy SE & Co. KG, 22419 Hamburg (DE)
(72) Inventor: Garcia, Ivan, BARASOAIN (ES); Rubio Guillen, Iñigo, BARASOAIN (ES); Arlabán, Teresa, BARASOAIN (ES)
(74) Representative: Pons

(57) **Abstract**

The object of the invention is an adapter of a tower of a wind turbine, a concrete section of a tower of a wind turbine and a wind turbine comprising a tower which in turn comprises the adapter and/or the concrete section.

## Description

### OBJECT OF THE INVENTION

The object of the invention is an adapter of a tower of a wind turbine and a concrete section of a tower of a wind turbine.

The invention also relates to a wind turbine comprising a tower which in turn comprises the adapter and/or the concrete section.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, in both embodiments, the adapter is joined to the immediately below concrete part or section by means of bolts passing through a first set of holes. The adapter also comprises a second set of holes for allowing the passage of tensioning elements of the tower. The first set of holes and the second set of holes are disposed in concentrical circumferences with different radius, thus needing more material and complex system for attaching auxiliary devices of the tower or thus resulting in technical solutions wherein the disposition of the tensioning elements far from the inner tower wall not carrying out an optimum post-tensioning of the concrete wall.

The present invention solves the problems described above.

### DESCRIPTION OF THE INVENTION

The invention relates to an adapter of a tower of a wind turbine, wherein the tower comprises the adapter, a concrete section, a plurality of tensioning elements configured to tension the tower and a plurality of bolts configured to join the adapter to the concrete section;
wherein the concrete section comprises:
   - at least one concrete segment; and
wherein the adapter comprises:
   - a central vertical axis; and
   - a lower flange which in turn comprises:
      - a first set of holes intended to accommodate, in use, the plurality of tensioning elements, wherein each hole of the first set of holes comprises an axis and a first diameter; and
      - a second set of holes intended to accommodate, in use, the plurality of bolts, wherein each hole of the second set of holes comprises an axis and a second diameter;
wherein the axes of the holes of the first set of holes define a first imaginary cylinder having a first radius with regards to the central vertical axis and the axes of the holes of the second set of holes define a second imaginary cylinder having a second radius with regards to the central vertical axis, wherein the absolute value of a difference between the first radius and the second radius is smaller than the first diameter of the first set of holes.

Optionally, the absolute value of the difference between the first radius and the second radius is smaller than the second diameter of the second set of holes.

Optionally, the absolute value of the difference between the first radius and the second radius is smaller than 30mm, preferably smaller than 20mm, preferably smaller than 10mm and more preferably smaller than 5mm.

The radii of these imaginary cylinders are such that the tensioning elements and bolts are as close as possible to the inner wall of both the adapter and the tower section and the first set of holes and the second set of holes do not overlap.

The adapter so configured, intended to be connected to the concrete section disposed below comprises a region, i.e., the lower flange, wherein the tensioning elements and the bolts are not overlapped in a radial direction, thus reducing the stresses in the lower flange.

Optionally, the axes of the holes of the first set of holes and the axes of the holes of the second set of holes are essentially contained in the same imaginary cylinder.

Furthermore, it is created a region along the inner wall of the tower free of tensioning elements and thus creating enough space, the clearance gap, for the disposition of an elevator, a ladder or other elements in said projection and also ensuring that the tensioning elements, as well as the elevator, the ladder or the other elements, are as close as possible to the tower inner wall. This solution provides important advantages compared to other possible solutions, for example wherein the elevator is disposed far from the inner wall of the tower since it would be necessary more material and a complex system for attaching ladder and elevator to the wall as it needs to allow enough space between ladder-elevator and inner tower wall to allocate at least one tensioning element, or alternatively to dispose the tensioning elements far from the inner tower wall since in this way cannot be carried out an optimum post-tensioning of the concrete wall.

Optionally, the adapter further comprises an upper flange configured to join the adapter, in use, to at least one second tower section or to a wind turbine component; and a central portion joining the lower flange and the upper flange; wherein the lower flange comprises an annular horizontal zone and an inclined circumferential zone adjacent to the central portion, wherein the inclined circumferential zone comprises a proximal end adjacent to the annular horizontal zone, wherein the axes of the holes of the first set of holes and the axes of the holes of the second set of holes are disposed on the annular horizontal zone.

Preferably, the holes of the first set of holes comprise a first diameter and the holes of the second set of holes comprise a second diameter, wherein the first diameter and the second diameter are contained in the annular horizontal zone.

Preferably, the first diameter of the holes of the first set of holes is between 175 and 225 mm, more preferably between 190 and 210mm and the second diameter of the holes of the second set of holes is between 60 and 80 mm, more preferably between 65 and 75 mm.

Optionally, a distance from the axes of the holes of the first set of holes and the axes of the holes of the second set of holes, to the proximal end of the inclined circumferential zone of the lower flange is between 100mm and 160mm, preferably between 115 and 145mm.

In use, the plurality of tensioning elements accommodated in the holes of the first set of holes and/or the plurality of the bolts accommodated in the holes of the second set of holes comprise heads, wherein the heads are disposed essentially tangential to the proximal end of the inclined circumferential end of the lower flange.

So, the tensioning elements and the bolts are disposed as close as possible to the central portion of the adapter, so limiting the stresses since the loads coming above the adapter are transmitted by the central portion.

Optionally, the first set of holes and the second set of holes are disposed in a single circumferential row.

So, disposing the first set of holes and the second set of holes in a single circumferential row, it is possible to dispose the tensioning elements as close as possible to the inner wall of the concrete section disposed below and therefore of the tower, so reducing the available space in the interior of the tower.

Also, alternating the first set of holes and the second set of holes in a single circumferential row, the space intended to be occupied by tensioning elements are now occupied by bolts, thereby reducing the stress on the concrete of the concrete section disposed below the adapter.

The invention also relates to a concrete section of a tower of a wind turbine, wherein the tower comprises the concrete section, an adapter, a plurality of tensioning elements configured to tension the tower and a plurality of bolts configured to join the adapter to the concrete section;
wherein the concrete section comprises:
   - a central vertical axis;
   - at least one concrete segment;
   - an upper flange which in turn comprises:
      - a first set of holes intended to accommodate, in use, the plurality of tensioning elements, wherein each hole (31) of the first set of holes (31) comprises an axis and a first diameter; and
      - a second set of holes intended to accommodate the plurality of bolts, wherein each hole of the second set of holes comprises an axis and a second diameter;
wherein the axes of the holes of the first set of holes define a first imaginary cylinder having a first radius with regards to the central vertical axis and the axes of the holes of the second set of holes define a second imaginary cylinder having a second radius with regards to the central vertical axis, wherein the absolute value of a difference between the first radius and the second radius is smaller than the first diameter of the first set of holes.

Optionally, the absolute value of the difference between the first radius and the second radius is smaller than the second diameter of the second set of holes. Optionally, the absolute value of the difference between the first radius and the second radius is smaller than 30mm, preferably smaller than 20mm, preferably smaller than 10mm and more preferably smaller than 5mm. The concrete section so configured comprises a region, i.e., the upper flange, wherein the tensioning elements and the bolts are not overlapped in a radial direction, thus reducing the stresses in the upper flange.

Furthermore, it is created a region along the inner wall of the tower free of tensioning elements and thus creating enough space, the clearance gap, for the disposition of an elevator, a ladder or other elements in said projection and also ensuring that the tensioning elements, as well as the elevator, the ladder or the other elements, are as close as possible to the tower inner wall. This solution provides important advantages compared to other possible solutions, for example wherein the elevator is disposed far from the inner wall of the tower since it would be necessary more material and a complex system for attaching ladder and elevator to the wall as it needs to allow enough space between ladder-elevator and inner tower wall to allocate at least one tensioning element, or alternatively to dispose the tensioning elements far from the inner tower wall since in this way cannot be carried out an optimum post-tensioning of the concrete wall.

Optionally, the axes of the holes of the first set of holes and the vertical axes of the holes of the second set of holes are essentially contained in the same imaginary cylinder.

Optionally, the holes of the first set of holes comprise a first diameter and the holes of the second set of holes comprise a second diameter, wherein the first diameter of the holes of the first set of holes is between 175 and 225 mm, more preferably between 190 and 210mm and the second diameter of the holes of the second set of holes is between 60 and 80 mm, more preferably between 65 and 75 mm.

Optionally, the first set of holes and the second set of holes are disposed in a single circumferential row.

So, disposing the first set of holes and the second set of holes in a single circumferential row, it is possible to dispose the tensioning elements as close as possible to the inner wall of the concrete section and therefor of the tower, so reducing the available space in the interior of the tower.

Also, alternating the first set of holes and the second set of holes in a single circumferential row, the space intended to be occupied by tensioning elements are now occupied by bolts, thereby reducing the stress on the concrete.

The invention also relates to a tower of a wind turbine comprising the adapter described above and/or the concrete section described above.

The tower further comprises a plurality of tensioning elements configured to tension the tower and a plurality of bolts configured to join the adapter to the concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

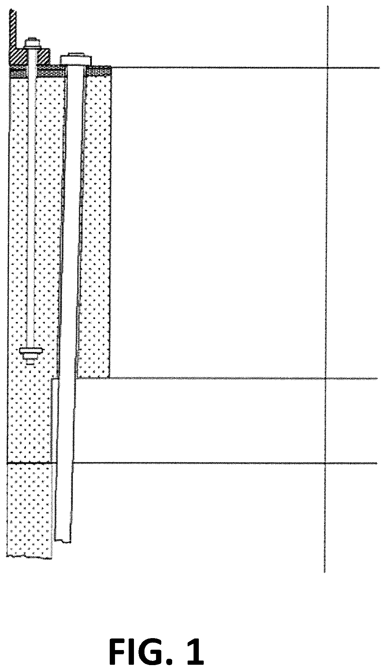

Figure 1 shows a concrete part and a steel part of an adapter of a wind turbine tower according to the state of the art, showing bolts passing through a first set of holes and a second set of holes for allowing the passage of tensioning elements of the tower, wherein the first set of holes and the second set of holes are disposed in concentrical circumferences with different radius.

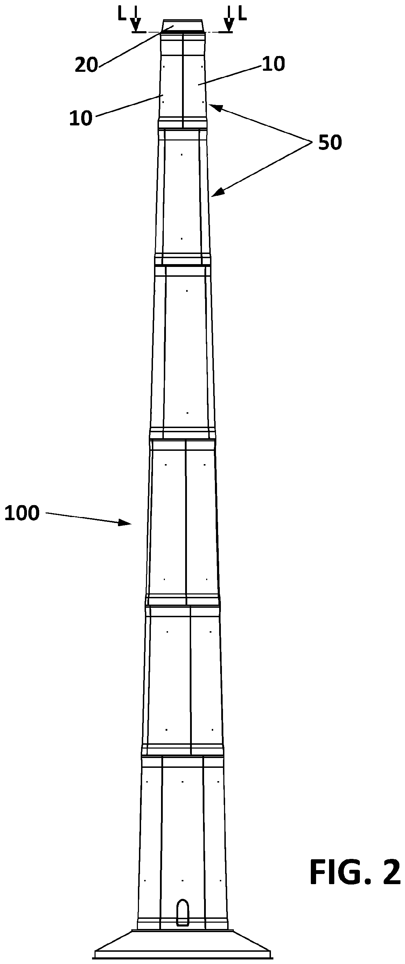

Figure 2 shows an elevation view of a tower of a wind turbine comprising an adapter according to the invention and a concrete section according to the invention.

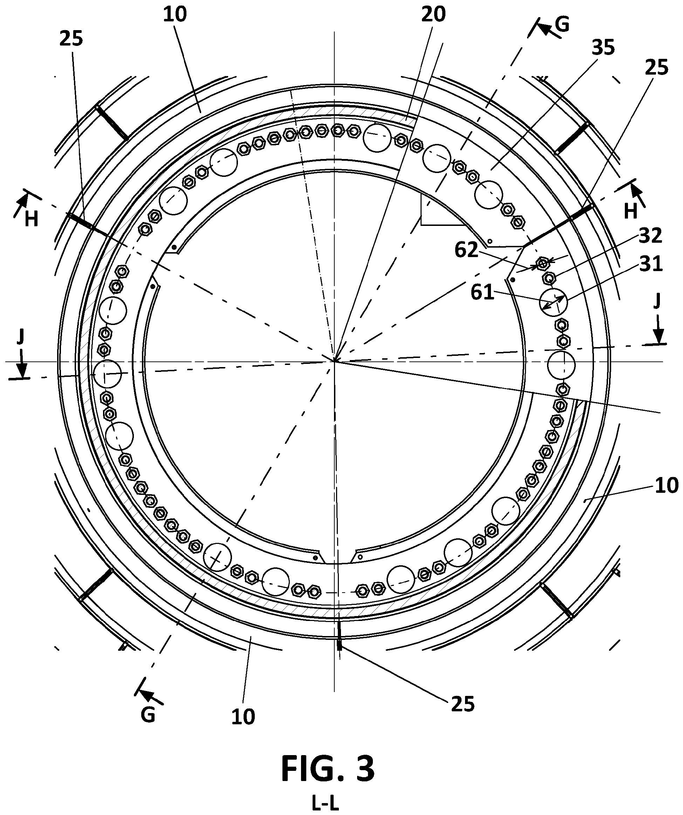

Figure 3 shows a detail of section view LL of the tower of Figure 2 according to a first embodiment, wherein the adapter has been partially deleted to shown the upper flange of the concrete section of the tower.

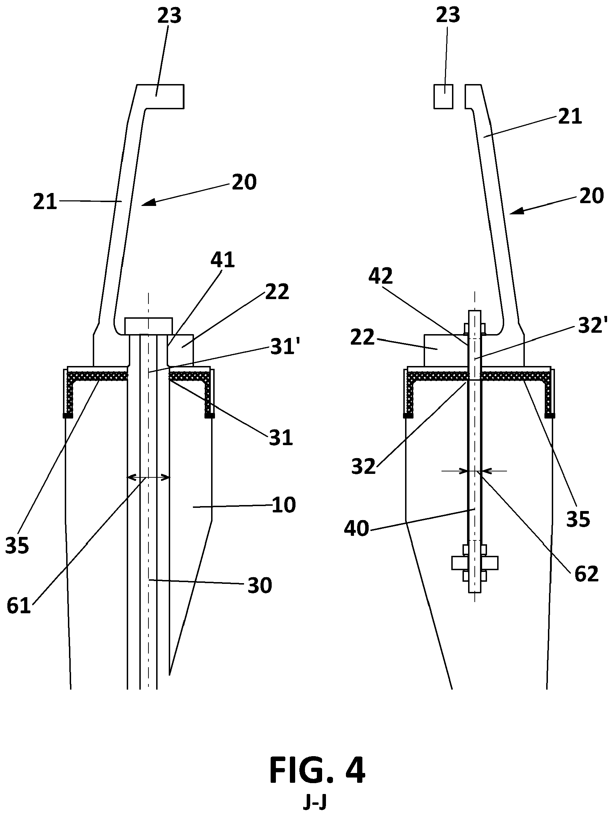

Figure 4 shows a section view JJ of Figure 3.

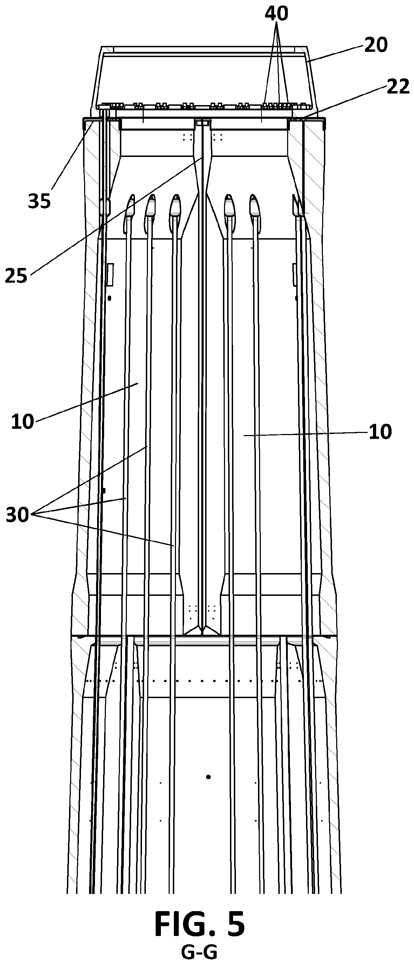

Figure 5 shows a section view GG of Figure 3.

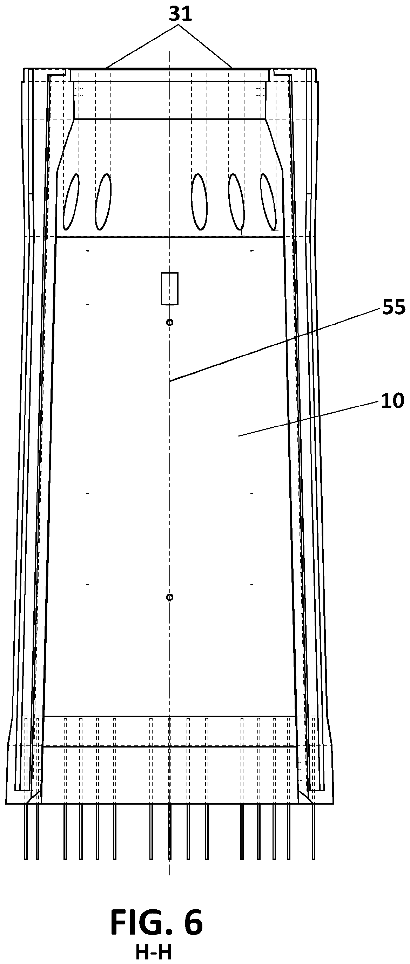

Figure 6 shows a section view HH of Figure 3.

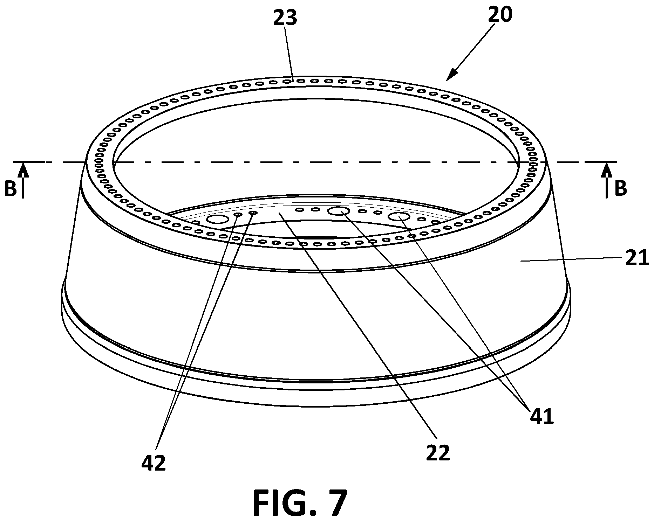

Figure 7 shows a perspective view of the adapter according to the invention.

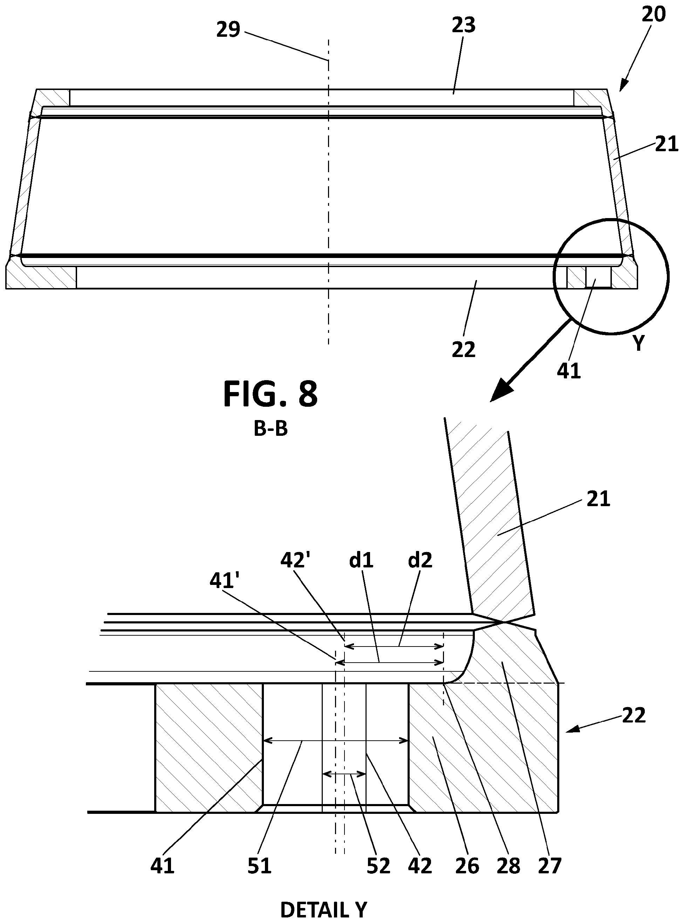

Figure 8 shows a section view BB of Figure 7 and a detail of this section view BB.

### PREFERRED EMBODIMENT OF THE INVENTION

The following is a detailed description of the adapter (20) of a tower (100) of a wind turbine, wherein the tower comprises the adapter (20), a concrete section (50), a plurality of tensioning elements (30) configured to tension the tower (100) and a plurality of bolts (40) configured to join the adapter (20) to the concrete section (50);
wherein the concrete section (50) comprises:
   - at least one concrete segment (10); and
wherein the adapter (20) comprises:
   - a central vertical axis (29); and
   - a lower flange (22) which in turn comprises:
      - a first set of holes (41) intended to accommodate, in use, the plurality of tensioning elements (30), wherein each hole (41) of the first set of holes (41) comprises an axis (41') and a first diameter (51); and
      - a second set of holes (42) intended to accommodate, in use, the plurality of bolts (40), wherein each hole (42) of the second set of holes (42) comprises an axis (42') and a second diameter (52);
wherein the axes (41') of the holes (41) of the first set of holes (41) define a first imaginary cylinder having a first radius with regards to the central vertical axis (29) and the axes (42') of the holes (42) of the second set of holes (42) define a second imaginary cylinder having a second radius with regards to the central vertical axis (29), wherein the absolute value of a difference between the first radius and the second radius is smaller than the first diameter of the first set of holes;
   - an upper flange (23) configured to join the adapter, in use, to at least one second tower section or to a wind turbine component; and
   - a central portion (21) joining the lower flange (22) and the upper flange (23);
wherein the lower flange (22) comprises an annular horizontal zone (26) and an inclined circumferential zone (27) adjacent to the central portion (21), wherein the inclined circumferential zone (27) comprises a proximal end (28) adjacent to the annular horizontal zone (26), wherein the axes (41') of the holes (41) of the first set of holes (41) and the axes (42') of the holes (42) of the second set of holes (42) are disposed on the annular horizontal zone (26).

In this embodiment, the first set of holes (41) and the second set of holes (42) are disposed in a single circumferential row.

In this embodiment, the first diameter (51) and the second diameter (52) are contained in the annular horizontal zone (26), wherein the first diameter (51) of the holes (41) of the first set of holes (41) is between 175 and 225 mm and the second diameter (52) of the holes (42) of the second set of holes (42) is between 60 and 80 mm.

A distance (d1, d2) defined from the axes (41') of the holes (41) of the first set of holes (41) and the axes (42') of the holes (42) of the second set of holes (42), to the proximal end (28) of the inclined circumferential zone (27) of the lower flange (22) is between 100mm and 160mm, preferably between 115mm and 145mm.

The plurality of tensioning elements (30) accommodated in the holes (41) of the first set of holes (41) and/or the plurality of the bolts (31) accommodated in the holes (42) of the second set of holes (42) comprise heads, wherein the heads are disposed essentially tangential to the proximal end (28) of the inclined circumferential end (27) of the lower flange (22).

Now it is described the concrete section (50) of a tower (100) of a wind turbine, wherein the tower (100) comprises the concrete section (50), an adapter (20), a plurality of tensioning elements (30) configured to tension the tower and a plurality of bolts (40) configured to join the adapter (20) to the concrete section (50);
wherein the concrete section (50) comprises:
   - a central vertical axis (55);
   - at least one concrete segment (10);
   - an upper flange (35) which in turn comprises:
      - a first set of holes (31) intended to accommodate, in use, the plurality of tensioning elements (30), wherein each hole (31) of the first set of holes (31) comprises an axis (31') and a first diameter (61); and
      - a second set of holes (32) intended to accommodate the plurality of bolts (40), wherein each hole (32) of the second set of holes (32) comprises an axis (32') and a second diameter (62);
wherein the axes (31') of the holes (31) of the first set of holes (31) define a first imaginary cylinder having a first radius with regards to the central vertical axis (55) and the axes (32') of the holes (32) of the second set of holes (32) define a second imaginary cylinder having a second radius with regards to the central vertical axis (55), wherein the absolute value of a difference between the first radius and the second radius is smaller than the first diameter (61) of the first set of holes (31).

In this embodiment, the first diameter (61) of the holes (31) of the first set of holes (31) is between 175 and 225 mm and the second diameter (62) of the holes (32) of the second set of holes (32) is between 60 and 80 mm.

Preferably, the first set of holes (31) and the second set of holes (32) are disposed in a single circumferential row.

The tower (100) of a wind turbine comprising the adapter (20) described above, the concrete section (50) described above and a plurality of tensioning elements (30) configured to tension the tower (100) and a plurality of bolts (40) configured to join the adapter (20) to the concrete section (50).

## Claims

1. Adapter (20) of a tower (100) of a wind turbine, wherein the tower comprises the adapter (20), a concrete section (50), a plurality of tensioning elements (30) configured to tension the tower (100) and a plurality of bolts (40) configured to join the adapter (20) to the concrete section (50);
wherein the concrete section (50) comprises:
- at least one concrete segment (10); and
wherein the adapter (20) comprises:
- a central vertical axis (29); and
- a lower flange (22) which in turn comprises:
- a first set of holes (41) intended to accommodate, in use, the plurality of tensioning elements (30), wherein each hole (41) of the first set of holes (41) comprises an axis (41') and a first diameter (51); and
- a second set of holes (42) intended to accommodate, in use, the plurality of bolts (40), wherein each hole (42) of the second set of holes (42) comprises an axis (42') and a second diameter (52);
wherein the axes (41') of the holes (41) of the first set of holes (41) define a first imaginary cylinder having a first radius with regards to the central vertical axis (29) and the axes (42') of the holes (42) of the second set of holes (42) define a second imaginary cylinder having a second radius with regards to the central vertical axis (29), wherein the absolute value of a difference between the first radius and the second radius is smaller than the first diameter of the first set of holes.

2. The adapter of claim 1, wherein the absolute value of the difference between the first radius and the second radius is smaller than the second diameter (52) of the second set of holes (42).

3. The adapter of any of previous claims, wherein the axes (41') of the holes (41) of the first set of holes (41) and the axes (42') of the holes (42) of the second set of holes (42) are essentially contained in the same imaginary cylinder.

4. The adapter of any of previous claims, further comprising:
- an upper flange (23) configured to join the adapter, in use, to at least one second tower section or to a wind turbine component; and
- a central portion (21) joining the lower flange (22) and the upper flange (23); wherein the lower flange (22) comprises an annular horizontal zone (26) and an inclined circumferential zone (27) adjacent to the central portion (21), wherein the inclined circumferential zone (27) comprises a proximal end (28) adjacent to the annular horizontal zone (26), wherein the axes (41') of the holes (41) of the first set of holes (41) and the axes (42') of the holes (42) of the second set of holes (42) are disposed on the annular horizontal zone (26).

5. The adapter of claim 4, wherein the first diameter (51) and the second diameter (52) are contained in the annular horizontal zone (26).

6. The adapter of claim 5 wherein the first diameter (51) of the holes (41) of the first set of holes (41) is between 175 and 225 mm and the second diameter (52) of the holes (42) of the second set of holes (42) is between 60 and 80 mm.

7. The adapter of any of claims 4 to 6, wherein a distance (d1, d2) from the axes (41') of the holes (41) of the first set of holes (41) and the axes (42') of the holes (42) of the second set of holes (42), to the proximal end (28) of the inclined circumferential zone (27) of the lower flange (22) is between 100mm and 160mm.

8. The adapter of claim 7, wherein the distance (d1, d2) from the axes (41') of the holes (41) of the first set of holes (41) and the axes (42') of the holes (42) of the second set of holes (42), to the proximal end (28) of the inclined circumferential zone (27) of the lower flange (22) is between 115mm and 145mm.

9. The adapter of any of claims 4 to 8, wherein, in use, the plurality of tensioning elements (30) accommodated in the holes (41) of the first set of holes (41) and/or the plurality of the bolts (31) accommodated in the holes (42) of the second set of holes (42) comprise heads, wherein the heads are disposed essentially tangential to the proximal end (28) of the inclined circumferential zone (27) of the lower flange (22).

10. The adapter of any of previous claims, wherein the first set of holes (41) and the second set of holes (42) are disposed in a single circumferential row.

11. Concrete section (50) of a tower (100) of a wind turbine, wherein the tower (100) comprises the concrete section (50), an adapter (20), a plurality of tensioning elements (30) configured to tension the tower and a plurality of bolts (40) configured to join the adapter (20) to the concrete section (50);
wherein the concrete section (50) comprises:
- a central vertical axis (55);
- at least one concrete segment (10);
- an upper flange (35) which in turn comprises:
- a first set of holes (31) intended to accommodate, in use, the plurality of tensioning elements (30), wherein each hole (31) of the first set of holes (31) comprises an axis (31') and a first diameter (61); and
- a second set of holes (32) intended to accommodate the plurality of bolts (40), wherein each hole (32) of the second set of holes (32) comprises an axis (32') and a second diameter (62);
wherein the axes (31') of the holes (31) of the first set of holes (31) define a first imaginary cylinder having a first radius with regards to the central vertical axis (55) and the axes (32') of the holes (32) of the second set of holes (32) define a second imaginary cylinder having a second radius with regards to the central vertical axis (55), wherein the absolute value of a difference between the first radius and the second radius is smaller than the first diameter (61) of the first set of holes.

12. The concrete section of claim 11, wherein the absolute value of the difference between the first radius and the second radius is smaller than the second diameter (62) of the second set of holes (32).

13. The concrete section of any of claims 11 or 12, wherein the axes (31') of the holes (31) of the first set of holes (31) and the vertical axes (32') of the holes (32) of the second set of holes (32) are essentially contained in the same imaginary cylinder.

14. The concrete section of any of claims 11 to 13, wherein the first diameter (61) of the holes (31) of the first set of holes (31) is between 175 and 225 mm and the second diameter (62) of the holes (32) of the second set of holes (32) is between 60 and 80 mm.

15. The concrete section of any of claims 11 to 14, wherein the first set of holes (31) and the second set of holes (32) are disposed in a single circumferential row.

16. Tower (100) of a wind turbine comprising the adapter (20) of any of claims 1 to 10 and/or the concrete section (50) of any of claims 11 to 15.

17. The tower (100) of claim 16, further comprising a plurality of tensioning elements (30) configured to tension the tower (100) and a plurality of bolts (40) configured to join the adapter (20) to the concrete section (50).
